# EUROPÄISCHE PATENTSCHRIFT

(11) **EP 2 771 261 B1**
(45) Veröffentlichungstag und Bekanntmachung des Hinweises auf die Patenterteilung: **06.01.2016**
(21) Anmeldenummer: 12759033.9
(22) Anmeldetag: 27.08.2012
(51) Int. Cl.: B65G 13/073, B65G 47/26

(54) **KUPPLUNGS-BREMS-EINHEIT FÜR EINEN STAUFÖRDERER**
CLUTCH-BRAKE UNIT FOR AN ACCUMULATION CONVEYOR
UNITÉ EMBRAYAGE-FREIN POUR UN CONVOYEUR ACCUMULATEUR

(30) Priorität: 27.10.2011 AT 15842011
(43) Veröffentlichungstag der Anmeldung: 03.09.2014
(73) Patentinhaber: Knapp AG, 8075 Hart bei Graz (AT)
(72) Erfinder: MATHI, Franz, A-8200 Gleisdorf (AT); BERGMANN, Jörg, A-8062 Kumberg (AT); WAUKMANN, Wilfried, A-8074 Raaba (AT)
(74) Vertreter: Röggla, Harald
(86) Internationale Anmeldenummer: PCT/EP2012/066580
(87) Internationale Veröffentlichungsnummer: WO 2013/060502

(56) Entgegenhaltungen:
- DE-A1- 4 333 625
- DE-A1- 10 027 433
- DE-A1-102006 043 731
- US-B2- 7 290 649

## Beschreibung

Die Erfindung betrifft eine Kupplungs-Brems-Einheit für einen Stauförderer zum Antreiben und zum Bremsen zumindest einer zum Transportieren von Stückgut auf einer Rollenbahn des Stauförderers vorgesehenen Rolle mittels eines endlosen Zugmittels, wobei die Kupplungs-Brems-Einheit über ein endloses Antriebs-Zugmittel an einer Antriebsrolle im Betrieb dauernd angetrieben wird und in einem eingekuppelten Betriebszustand zum Übertragen der Rotationsbewegung der Antriebsrolle um eine Achse an eine Abtriebsrolle und in einem Bremsbetriebszustand zum Abbremsen der Abtriebsrolle an einem Gehäuse der Kupplungs-Brems-Einheit ausgebildet ist, wobei die Abtriebsrolle über das endlose Zugmittel mit der Rolle verbunden ist.

Das Dokument EP 1 314 663 A1 offenbart so eine Kupplungs-Brems-Einheit bei der sowohl das erste Betätigungsmittel als auch das zweite Betätigungsmittel durch einen elektrisch betätigbaren Kupplungsmagneten gebildet ist. Eine Übertragungsschreibe und die Abtriebsrolle sind drehfest mit der Achse der Kupplungs-Brems-Einheit verbunden. Die Antriebsrolle ist mittels vier Kugellagern sowohl zur Achse als auch zum Gehäuse hin drehbar gelagert und zwischen der Übertragungsscheibe und der Abtriebsrolle angeordnet. In dem Bremsbetriebszustand wird ein an der Übertragungsscheibe gefedert gelagerter Bremsbelag durch einen der Kupplungsmagneten an eine Bremsscheibe des Gehäuses angezogen, wodurch der Bremsbelag die Übertragungsscheibe und mit dieser die Abtriebsrolle abgebremst. In dem eingekuppelten Betriebszustand wird ein an der Übertragungsscheibe gefedert gelagerter Kupplungsbelag durch den anderen Kupplungsmagneten an eine Kupplungsscheibe der Antriebsrolle angezogen, wodurch die Übertragungsscheibe und mit ihr die Abtriebsrolle von der Antriebsrolle angetrieben werden. Durch die drehfeste Verbindung der Übertragungsscheibe mit der Abtriebsrolle wird die Abtriebsrolle jeweils mit der Übertragungsscheibe abgebremst oder von der Antriebsrolle mitgenommen.

Die bekannte Kupplungs-Brems-Einheit weist den Nachteil auf, dass sie durch ihre vielen Einzelteile teuer und komplex in der Herstellung ist. Die federnde Lagerung des Bremsbelages und des Kupplungsbelages unterliegt der Alterung bei längeren Standzeiten, weshalb es bei nachlassender Federkraft zu schleifenden Bremsen und Kupplungen und dadurch bedingten Ausfällen der Kupplungs-Brems-Einheit gekommen ist.

Der Erfindung liegt die Aufgabe zugrunde, eine konstruktiv einfache, kostengünstige und zuverlässige Kupplungs-Brems-Einheit gemäß Anspruch 1 zu schaffen, bei der die vorstehenden Nachteile vermieden sind. Erfindungsgemäß wird diese Aufgabestellung dadurch gelöst, dass erste Betätigungsmittel zum Verschieben der Abtriebsrolle entlang der Achse in Richtung des Gehäuses ausgebildet sind, um die Kupplungs-Brems-Einheit in ihren Bremsbetriebszustand zu versetzen und, wobei zweite Betätigungsmittel zum Verschieben der Abtriebsrolle entlang der Achse in Richtung der Antriebsrolle ausgebildet sind, um die Kupplungs-Brems-Einheit in ihren eingekuppelten Betriebszustand zu versetzen.

Hierdurch ist der Vorteil erhalten, dass durch einfaches und zuverlässig realisierbares Verschieben der Abtriebsrolle entlang der Achse der Kupplungs-Brems-Einheit die Kupplungs-Brems-Einheit in ihren Bremsbetriebszustand und in ihren eingekuppelten Betriebszustand versetzbar ist. Zumindest die Bauteile der Übertragungsscheibe und die Federung des Brems- und Kupplungsbelags der Konstruktion gemäß dem Stand der Technik entfallen bei der erfindungsgemäßen Kupplungs-Brems-Einheit zur Gänze, da die Funktion der Übertragungsscheibe durch die verschiebbare Abtriebsrolle mit erfüllt wird. Hierdurch wurde die Anzahl der Bauteile und insbesondere auch das bei jedem Bremsvorgang oder Beschleunigungsvorgang zu bremsende oder zu beschleunigende Gewicht bei zumindest gleicher mechanischer Festigkeit deutlich eingespart. Als Betätigungsmittel zum Verschieben der Abtriebsrolle können hierbei beispielsweise sowohl Zug- oder Druckfedern, Kolben-Zylinder Einheiten mit Unter- oder Überdruck oder auch Elektromagnete dienen.

Als besonders vorteilhaft hat sich jedoch erwiesen das erste Betätigungsmittel durch eine mit Überdruck betriebene Kolben-Zylinder Einheit und das zweite Betätigungsmittel durch eine Druckfeder zu realisieren. Hierdurch ist erreicht, dass die Abtriebsrolle und somit die Rolle des Stauförderers außerhalb der Betriebszeiten oder bei einem Ausfall der Energieversorgung des Stauförderers von der Druckfeder gebremst wird. Die erfindungsgemäße Konstruktion hat weiters den Vorteil, dass die Abtriebsrolle entweder durch den durch eine starke Druckfeder erzielbaren starken Bremsdruck zuverlässig gebremst oder durch den mit der integrierten Kolben-Zylinder-Einheit erzielbaren starken Pressdruck zuverlässig eingekuppelt wird.

Das Vorsehen der in die Kupplungs-Brems-Einheit integrierten Kolben-Zylinder Einheit als erstes und/oder zweites Betätigungsmittel hat den Vorteil, dass nur sehr wenig Volumen der Duckluft nötig ist, um die Kupplungs-Brems-Einheit von einem Betriebszustand in den anderen Betriebszustand zu versetzen. Durch den geringeren Bedarf an Druckluft kann die Kupplungs-Brems-Einheit besonders energieeffizient betrieben werden.

Besonders vorteilhaft ist weiters die Verwendung eines Materials für die Kupplungs- und Bremsscheibe, das den wesentlichen Teil der beim Kuppeln und Bremsen abzuleitenden Kupplungs- bzw. Bremsenergie nicht durch Materialabrieb sondern durch elastische und thermische Energieumwandlung abbaut. Hierbei sind Elastomere wie beispielsweise Polyurethan besonders gut einsetzbar. Die Kombination des starken Pressdrucks durch die erfindungsgemäßen Betätigungsmittel und die Verwendung eines elastische Eigenschaften aufweisenden Materials für die Brems- und Kupplungsscheibe erzielt in der praktischen Realisierung überraschend gute Beschleunigungs- und Bremswerte auch bei Transport von schwerem Stückgut und ermöglicht eine viel längere Standzeit als bei herkömmlichen Kupplungs-Brems-Einheiten.

Als sehr vorteilhaft hat sich auch erwiesen, dass bei der erfindungsgemäßen Kupplungs-Brems-Einheit die Abtriebsrolle nahe an den Befestigungsmitteln der Kupplungs-Brems-Einheit an dem Rahmen der Rollenbahn und folglich näher als die Antriebsrolle vorgesehen ist. Hierdurch kann die gesamte Förderrollenbreite zum Transport des Stückguts genutzt werden.

Weitere vorteilhafte Ausgestaltungen des erfindungsgemäßen Systems werden im Folgenden anhand der Figuren näher erläutert.
Figur 1 zeigt schematisch die Rollenbahn eines Stauförderers mit einer Kupplungs-Brems-Einheit.
Figur 2 zeigt drei Rollen und die Kupplungs-Brems-Einheit der Rollenbahn gemäß Figur 1 in einer Schrägansicht.
Figur 3 zeigt die Kupplungs-Brems-Einheit der Rollenbahn gemäß Figur 1 in einer Seiten- und einer Schrägansicht.
Figur 4 zeigt die Kupplungs-Brems-Einheit der Rollenbahn gemäß Figur 1 in einer Schnittdarstellung.

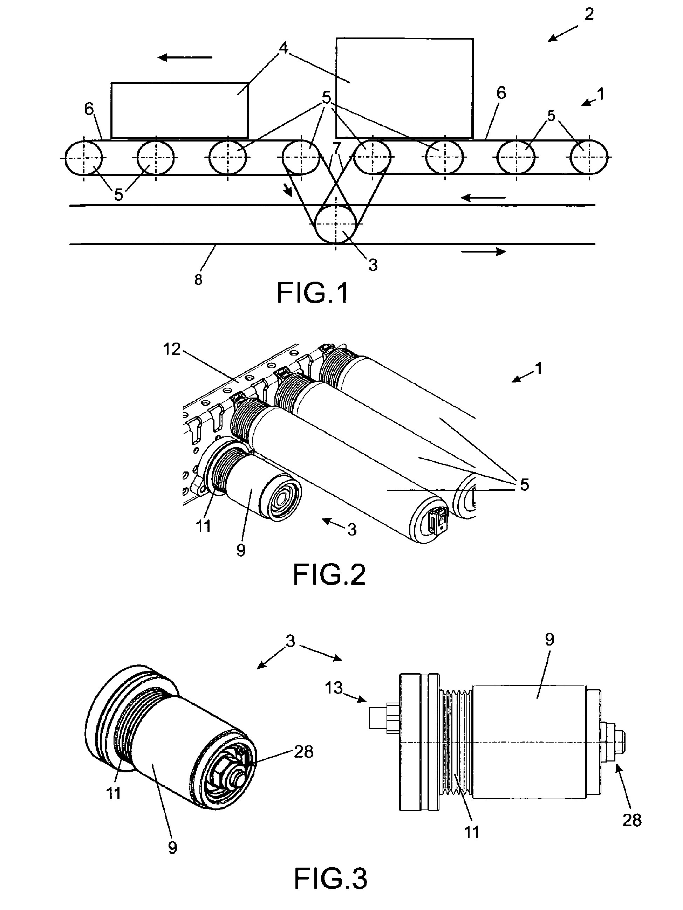

Figur 1 zeigt schematisch einen Abschnitt einer Rollenbahn 1 eines Stauförderers 2 mit einer Kupplungs-Brems-Einheit 3. Mit dem Stauförderer 2 wird Stückgut 4, das beispielsweise aus einem Lager zu Kommissionierplätzen transportiert wird von zwei Förderbändern auf eines zusammen geführt. Um ein Zusammenstoßen des Stückguts 4 zu verhindern wird das Stückgut in bestimmten Abschnitten der Rollenbahn 1 entsprechend beschleunigt und abgebremst. Der in Figur 1 dargestellte Abschnitt der Rollenbahn 1 weist acht Rollen 5 auf, die mittels endlosen Zugmitteln 6 miteinander verbunden sind. Eine übergeordnete Steuereinrichtung gibt Steuerinformationen vor, wann die Rollen 5 der Rollenbahn 1 abgebremst oder beschleunigt werden sollen.

Zum entsprechenden Antreiben der Rollen 5 weist der Stauförderer 2 die Kupplungs-Brems-Einheit 3 auf, die über zwei durch Keilrippriemen gebildete endlose Zugmittel 7 mit den Rollen 5 verbunden ist. Die Kupplungs-Brems-Einheit 3 ist über ein endloses Antriebs-Zugmittel 8 an einer Antriebsrolle 9 im Betrieb dauernd angetrieben und die Kupplungs-Brems-Einheit 3 ist in einem eingekuppelten Betriebszustand zum Übertragen der Rotationsbewegung der Antriebsrolle 9 mittels einer Kupplungsscheibe 10 an eine Abtriebsrolle 11 und über das endlose Zugmittel 7 an die Rollen 5 ausgebildet. Auf den Aufbau der Kupplungs-Brems-Einheit 3 ist anhand der Figuren 2 bis 4 näher eingegangen.

Figur 2 zeigt drei Rollen 5 und die Kupplungs-Brems-Einheit 3 der Rollenbahn 1 gemäß Figur 1 in einer Schrägansicht. Sowohl die Rollen 5 als auch die Kupplungs-Brems-Einheit 3 sind an einem Rahmen 12 der Rollenbahn 1 befestigt. Die Rollen 5 befinden sich zum Transport des Stückguts 4 in einer Ebene und die Kupplungs-Brems-Einheit 3 ist unterhalb dieser Ebene an dem Rahmen 12 mit einer Befestigungsmittel bildenden Schraube-Mutter-Kombination 13 befestigt. Die Kupplungs-Brems-Einheit 3 ist so konstruiert, dass die Abtriebsrolle 11 zwischen den Befestigungsmitteln und der Antriebsrolle 9 unmittelbar neben dem Rahmen 12 der Rollenbahn 1 angeordnet ist. Hierdurch ist der Vorteil erhalten, dass im Wesentlichen die gesamte Breite des Rahmens 12 als Auflagefläche der Rollen 5 für das Stückgut 4 genutzt werden kann.

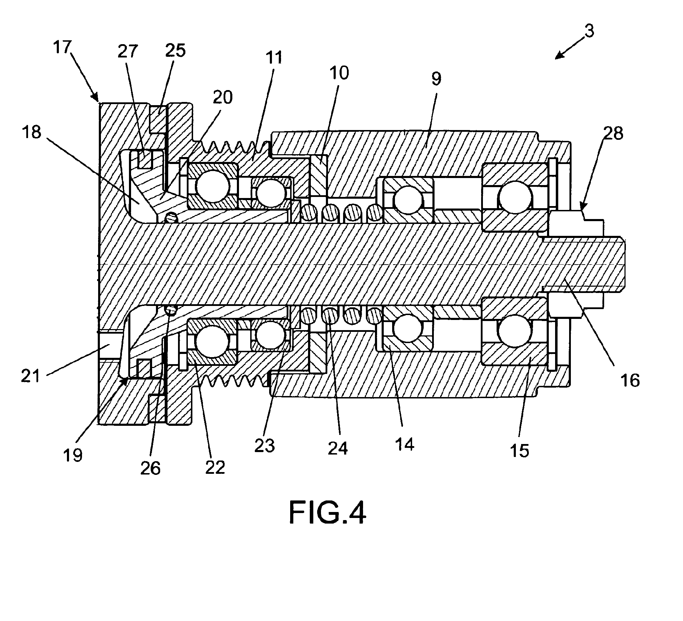

Figur 4 zeigt die Kupplungs-Brems-Einheit 3 der Rollenbahn 1 gemäß Figur 1 in einer Schnittdarstellung. Die Kupplungs-Brems-Einheit 3 weist die Antriebsrolle 9 auf, die mittels Kugellagern 14 und 15 drehbar auf der Achse 16 gelagert ist. Das beispielsweise durch ein Flachband oder einen Zahnriemen gebildete Antriebs-Zugmittel 8 zum Antreiben der Antriebsrolle 9 ist in Figur 4 nicht dargestellt. Die Achse 16 ist als Teil des Gehäuses 17 der Kupplungs-Brems-Einheit 3 einstückig mit einem Zylinder 18 einer Kolben-Zylinder-Einheit 19 ausgebildet. Hierbei bildet ein Teil der Gehäusewand den Zylinder 18 in dem der Kolben 20 linear verschiebbar auf der Achse 16 vorgesehen ist. An eine Druckluftöffnung 21 ist eine Druckluftleitung angeschlossen, deren Leitungsdruck durch einen Kompressor erzeugt und mittels zwischen dem Kompressor und der Druckluftöffnung 21 vorgesehenen Ventilen durch die übergeordnete Steuereinrichtung gesteuert wird.

Auf dem Kolben 20 ist die Abtriebsrolle 11 durch zwei Kugellager 22 und 23 drehbar gelagert vorgesehen. Eine Druckfeder 24 drückt auf den linear verschiebbaren Kolben 20, wodurch die Abtriebsrolle 11 an eine Bremsscheibe 25 an dem Gehäuse 17 gepresst wird und die Abtriebsrolle 11 in der Bremsbetriebsart abgebremst wird. Wird ein entsprechend großer Luftdruck über die Druckluftöffnung 21 in den Zylinder 18 geleitet, dann verschiebt sich der Kolben 20 entgegen der Federkraft der Druckfeder 24 und presst die Kupplungsscheibe 10 gegen die Antriebsrolle 9. In diesem eingekuppelten Betriebszustand der Kupplungs-Brems-Einheit 3 wird die Rotationsbewegung der Antriebsrolle 9 über die Kupplungsscheibe 10, die Abtriebsrolle 11 und die in Figur 4 nicht dargestellten Keilrippenriemen an die Rollen 5 abgegeben. Dichtringe 26 und 27 dichten den Innenraum des Zylinders 18 zur Achse 16 und der Innenwand des Gehäuses 17 hin ab. Mit nur einer Schraubenmutter 28 werden sämtliche Teile der Kupplungs-Brems-Einheit 3 verschraubt, wodurch Reparaturen leicht durchführbar sind.

Besonders vorteilhaft an der Konstruktion der Kupplungs-Brems-Einheit 3 ist weiters, dass abgesehen von der Kupplungsscheibe 10 aus leichtem Kunststoff nur die Antriebsrolle 9 und die Abtriebsrolle 11 drehende Teile aus Metall oder ähnlich mechanisch festem Material sind, die bei jedem Brems- und Beschleunigungsvorgang gebremst oder beschleunigt werden müssen. Hierdurch kann sehr energieeffizient und rasch gebremst und beschleunigt werden. Das Vorsehen der mechanischen Druckfeder 24 und der Kolben-Zylinder-Einheit 19 zum Verschieben des Abtriebsrolle 11 hat den Vorteil, dass gerade mit diesen beiden Betätigungsmitteln kostengünstig und einfach große Kräfte erzielbar sind, die als Anpresskraft auf der Bremsscheibe 25 und der Kupplungsscheibe 10 eine sichere und gute Kraftübertragung gewährleisten. Die in die Kupplungs-Brems-Einheit 3 integrierte Kolben-Zylinder-Einheit 19 ermöglicht zudem eine sehr kompakte bauweise, wodurch zur Steuerung der Kupplungs-Brems-Einheiten 3 der unterschiedlichen Abschnitte der Rollerbahn 1 durch die übergeordnete Steuerungseinrichtung nur die Druckluftleitungen angeschlossen werden müssen.

Es kann erwähnt werden, dass die Kupplungs-Brems-Einheit 3 auch hydraulisch betrieben werden könnte, aber die Realisierung mittels pneumatischem Zylinder 17 hat sich als besonders vorteilhaft herausgestellt.

Die Kupplungsscheibe 10 und die Bremsscheibe 25 sind als kraftschlüssige Reibkupplungen ausgebildet, deren Material die Kupplungs- und Bremsenergie über elastische und thermische Energieumwandlung, praktisch ohne Materialabtrag an den Reibflächen, abbaut. Hierfür wurde als Material der Kupplungsscheibe 10 und der Bremsscheibe 25 ein Elastomer und hierbei insbesondere ein Polyurethan vorgesehen. Dieses Material zeichnet sich dadurch aus, dass es sich beim Bremsvorgang oder beim Einkuppeln deformiert und dann bedingt durch die Reibung in gewissem Umfang erwärmt, jedoch praktisch nicht abreibt, wie dies bei Kupplungen und Bremsbelägen das allgemein übliche Wirkprinzip darstellt. Auf diese Weise ist wird eine besonders lange Standzeit der Kupplungs-Brems-Einheit 3 ohne der Notwendigkeit die Brems- oder Kupplungsscheibe zu tauschen erzielt.

Es kann erwähnt werden, dass es auch vorteilhaft sein kann als Material der Kupplungsscheibe 10 und der Bremsscheibe 25 einen Thermoplast und hierbei insbesondere ein Polyamid zu verwenden. Aber auch die Verwendung eines Duroplastes als Material der Kupplungsscheibe 10 und der Bremsscheibe 25 hat vorteilhafte Wirkungen gezeigt.

Bei der Kupplungs-Brems-Einheit 3 ist die Bremsscheibe 25 in dem Gehäuse 17 und die Kupplungsscheibe 10 in der Antriebsrolle 9 befestigt. Ebenso könnten aber auch die Bremsscheibe 25 und/oder die Kupplungsscheibe 10 an der Abtriebsrolle 11 befestigt vorgesehen sein.

Es wäre auch möglich die Druckfeder 24 als Zugfeder auszubilden, die die Abtriebsrolle in ihren eingekuppelten Betriebszustand zieht. Durch Beaufschlagen von Unterdruck in dem Zylinder könnte die Abtriebsrolle in den Bremsbetriebszustand der Kupplungs-Brems-Einheit gesteuert werden.

Gemäß einem weiteren Ausführungsbeispiel wäre es auch möglich sowohl das erste Betätigungsmittel als auch das zweite Betätigungsmittel zum Verschieben der Abtriebsrolle entlang der Achse durch eine Kolben-Zylinder Einheit zu realisieren. Hierbei könnte die Druckluftzufuhr zu dem Zylinder des ersten Betätigungsmittels über eine Bohrung in der Achse erfolgen. Bei einem besonders vorteilhaften Ausführungsbeispiel könnte das erste und das zweite Betätigungsmittel auch durch nur die eine in Figur 4 dargestellte Kolben-Zylinder Einheit 19 gebildet sein. Mittels Druckluft im Zylinder 19 wird die Abtriebsrolle 11 in ihren eingekuppelten Betriebszustand verstellt und mittels Unterdruck im Zylinder 19 wird die Kolben-Zylinder Einheit 19 in den Bremsbetriebszustand verstellt.

Gemäß einem weiteren Ausführungsbeispiel ist das erste Betätigungsmittel und/oder das zweite Betätigungsmittel durch einen Elektromagneten gebildet, der bzw. die eine Ankerplatte oder die aus Metall gefertigte Abtriebsrolle entlang der Achse verschiebt. Es könnten auch beliebige Kombinationen der vorstehenden beschriebenen Betätigungsmittel kombiniert werden.

Gemäß einem weiteren Ausführungsbeispiel der Erfindung ist die Abtriebsrolle selber aus einem Material für eine kraftschlüssige Reibkupplung (z.B. Polyurethan oder Polyamid) hergestellt, weshalb vorteilhafterweise auf das Vorsehen einer gesonderten Bremsscheibe und/oder einer gesonderten Kupplungsscheibe verzichtet werden kann. In diesem Ausführungsbeispiel wird die Abtriebsrolle von den ersten Betätigungsmitteln im Bremsbetriebszustand zum Abbremsen der Abtriebsrolle unmittelbar gegen das Gehäuse gepresst. Im eingekuppelten Betriebszustand wird die Abtriebsrolle von den zweiten Betätigungsmitteln unmittelbar gegen die Antriebsrolle gepresst. Auch wäre es möglich, das Gehäuse zumindest in dem Bereich, in dem die Abtriebsrolle an das Gehäuse gepresst wird, und/oder die Antriebsrolle aus einem Material für eine kraftschlüssige Reibkupplung herzustellen. Von den Reibpartnern beim Bremsen und Einkuppeln könnte jeweils einer dieser Teile aus einem Metall und der andere aus dem Material für eine kraftschlüssige Reibkupplung bestehen oder es könnten auch beide Reibpartner aus dem Material für eine kraftschlüssige Reibkupplung bestehen.

Es kann erwähnt werden, dass als endlos Zugmittel 7 vorteilhafterweise ein einen axialen Versatz zulassendes Zugmittel verwendet wird. Hierdurch werden auch dann, wenn die Abtriebsrolle 11 in den Bremsbetriebszustand oder den eingekuppelten Betriebszustand versetzt ist, die Rollen 5 zuverlässig angetrieben. Solche endlosen Zugmittel sind beispielsweise der Keilrippriemen 7, aber auch Rundriemen oder eine Kette.

Es kann erwähnt werden, dass der Begriff Stauförderer in diesem Dokument dahingehend auszulegen ist, dass beispielsweise auch ein Bandförderer oder Riemenförderer unter diesem Begriff zu verstehen ist.

## Patentansprüche

1. Kupplungs-Brems-Einheit (3) für einen Stauförderer (2) zum Antreiben und zum Bremsen zumindest einer zum Transportieren von Stückgut (4) auf einer Rollenbahn (1) des Stauförderers (2) vorgesehenen Rolle (5) mittels eines endlosen Zugmittels (7), wobei die Kupplungs-Brems-Einheit (3) über ein endloses Antriebs-Zugmittel (8) an einer Antriebsrolle (9) im Betrieb dauernd angetrieben wird und in einem eingekuppelten Betriebszustand zum Übertragen der Rotationsbewegung der Antriebsrolle (9) um eine Achse (16) an eine Abtriebsrolle (11) und in einem Bremsbetriebszustand zum Abbremsen der Abtriebsrolle (11) an einem Gehäuse (17) der Kupplungs-Brems-Einheit (3) ausgebildet ist, wobei die Abtriebsrolle (11) über das endlose Zugmittel (7) mit der Rolle (5) verbunden ist, **dadurch gekennzeichnet, dass**
erste Betätigungsmittel zum Verschieben der Abtriebsrolle (11) entlang der Achse (16) in Richtung des Gehäuses (17) ausgebildet sind, um die Kupplungs-Brems-Einheit (3) in ihren Bremsbetriebszustand zu versetzen und, wobei zweite Betätigungsmittel zum Verschieben der Abtriebsrolle (11) entlang der Achse (16) in Richtung der Antriebsrolle (9) ausgebildet sind, um die Kupplungs-Brems-Einheit (3) in ihren eingekuppelten Betriebszustand zu versetzen und, wobei die ersten Betätigungsmittel durch eine Feder und insbesondere durch eine Druckfeder (24) gebildet sind und das die zweiten Betätigungsmittel durch eine in der Kupplungs-Brems-Einheit (3) integrierte Kolben-Zylinder Einheit (19) gebildet sind, deren Kolben (20) entlang der Achse (16) der Kupplungs-Brems-Einheit (3) linear geführt über zumindest ein Kugellager (22, 23) die Abtriebsrolle (11) drehbar lagert, und wobei die Kupplungs-Brems-Einheit (3) bei drucklosem Zylinder (18) insbesondere in ihren Bremsbetriebszustand gesteuert ist.

2. Kupplungs-Brems-Einheit (3) gemäß Anspruch 1, **dadurch gekennzeichnet, dass** zwischen der Abtriebsrolle (11) und dem Gehäuse (17) eine Bremsscheibe (25) und/oder zwischen der Abtriebsrolle (11) und der Antriebsrolle (9) eine Kupplungsscheibe (10) vorgesehen ist.

3. Kupplungs-Brems-Einheit (3) gemäß Anspruch 1, **dadurch gekennzeichnet, dass** die ersten Betätigungsmittel im Bremsbetriebszustand zum Pressen der Abtriebsrolle (11) an das Gehäuse (17) und/oder die zweiten Betätigungsmittel in dem eingekuppelten Betriebszustand zum Pressen der Abtriebsrolle (11) an die Antriebsrolle (9) ausgebildet sind.

4. Kupplungs-Brems-Einheit gemäß einem der Ansprüche 1 bis 3, **dadurch gekennzeichnet, dass** die ersten Betätigungsmittel und die zweiten Betätigungsmittel durch eine integrierte Kolben-Zylinder Einheit gebildet sind, deren Kolben entlang der Achse der Kupplungs-Brems-Einheit linear geführt über zumindest ein Kugellager die Abtriebsrolle drehbar lagern.

5. Kupplungs-Brems-Einheit (3) gemäß einem der vorherigen Ansprüche, **dadurch gekennzeichnet, dass** die Kupplungsscheibe (10) und/oder die Bremsscheibe (25) und/oder die Abtriebsrolle (11) und/oder die Antriebsrolle (9) und/oder das Gehäuse (17) aus einem Material für eine kraftschlüssige Reibkupplung bestehen, das die Kupplungs- und/oder Bremsenergie über elastische und thermische Energieumwandlung, praktisch ohne Materialabtrag an den Reibflächen, abbaut.

6. Kupplungs-Brems-Einheit (3) gemäß Anspruch 5, **dadurch gekennzeichnet, dass** als Material der Kupplungsscheibe (10) und/oder der Bremsscheibe (25) und/oder der Antriebsrolle (11) und/oder der Antriebsrolle (9) und/oder des Gehäuses (17) ein Elastomer und hierbei insbesondere ein Polyurethan oder ein Thermoplast und hierbei insbesondere ein Polyamid vorgesehen ist.

7. Kupplungs-Brems-Einheit (3) gemäß einem der vorherigen Ansprüche, **dadurch gekennzeichnet, dass** Befestigungsmittel (13) zum Befestigen der Kupplungs-Brems-Einheit (3) an einem Rahmen (12) der Rollenbahn (1) in Betriebslage unterhalb der Rollen (5) vorgesehen sind, wobei die Abtriebsrolle (11) näher den Befestigungsmitteln (13) als die Antriebsrolle (9) vorgesehen ist.

8. Kupplungs-Brems-Einheit (3) gemäß einem der vorherigen Ansprüche, **dadurch gekennzeichnet, dass** als endloses Zugmittel (7) ein einen axialen Versatz zulassendes Zugmittel vorgesehen ist, wobei insbesondere eines der folgenden Zugmittel vorgesehen ist: Keilrippriemen; Rundriemen; Kette.

9. Kupplungs-Brems-Einheit (3) gemäß einem der vorherigen Ansprüche, **dadurch gekennzeichnet, dass** der Zylinder (18) der Kolben-Zylinder-Einheit (19) als pneumatischer Zylinder (18) ausgebildet ist und, dass der Kolben (20) gegenüber dem Gehäuse (17) und der Achse (16) mittels Dichtmitteln, insbesondere Dichtringen (26, 27) abgedichtet ist.

10. Stauförderer (2) mit einer Rollenbahn (1) zum Transportieren von Stückgut (4), **dadurch gekennzeichnet, dass** zumindest eine Kupplungs-Brems-Einheit (3) gemäß einem der Ansprüche 1 bis 7 je Abschnitt der Rollenbahn (1) vorgesehen ist.

## Claims

1. A clutch/brake unit (3) for an accumulating conveyor (2) for driving and for braking at least one roller (5) which is provided for transporting a unit load (4) on a roller path (1) of the accumulating conveyor (2) by means of an endless traction mechanism (7), wherein the clutch/brake unit (3) is driven continuously during operation via an endless drive traction mechanism (8) on a driving roller (9) and is configured, in an engaged operating state, for transmitting the rotational movement of the driving roller (9) about an axis (16) to a driven roller (11) and, in a braking operating state, for slowing down the driven roller (11) on a housing (17) of the clutch/brake unit (3), the driven roller (11) being connected to the roller (5) via the endless traction mechanism (7), **characterized in that**
first actuating means are configured for displacing the driven roller (11) along the axis (16) in the direction of the housing (17) in order to shift the clutch/brake unit (3) into its braking operating state and wherein second actuating means are configured for displacing the driven roller (11) along the axis (16) in the direction of the driving roller (9) in order to shift the clutch/brake unit (3) into its engaged operating state and that the first actuating means are consituted by a spring and in particular by a compression spring (24) and the second actuating means are consituted by a piston/cylinder unit (19) integrated in the clutch/brake unit (3), the piston (20) of which rotatably supports the driven roller (11) via at least one ball bearing (22, 23) while being guided linearly along the axis (16) of the clutch/brake unit (3), and wherein the clutch/brake unit (3) is guided with a depressurized cylinder (18) in particular into its braking operating state.

2. The clutch/brake unit (3) according to claim 1, **characterized in that** a brake disk (25) is provided between the driven roller (11) and the housing (17), and/or a clutch disk (10) is provided between the driven roller (11) and the driving roller (9).

3. The clutch/brake unit (3) according to claim 1, **characterized in that** the first actuating means are configured in the braking operating state for pressing the driven roller (11) against the housing (17), and/or the second actuating means are configured in the engaged operating state for pressing the driven roller (11) against the driving roller (9).

4. The clutch/brake unit (3) according to any of claims 1 to 3, **characterized in that** the first actuating means and the second actuating means are constituted by an integrated piston/cylinder unit, the piston of which rotatably supports the driven roller via at least one ball bearing while being guided linearly along the axis of the clutch/brake unit.

5. The clutch/brake unit (3) according to any of the preceding claims, **characterized in that** the clutch disk (10) and/or the brake disk (25) and/or the driven roller (11) and/or the driving roller (9) and/or the housing (17) consist(s) of a material for a non-positive friction clutch which dissipates the clutch and/or braking energy via elastic and thermal energy conversion virtually without any material removal on the friction surfaces.

6. The clutch/brake unit (3) according to claim 5, **characterized in that** an elastomer, and in this connection particularly a polyurethane, or a thermoplast, and in this connection particularly a polyamide, is provided as the material of the clutch disk (10) and/or the brake disk (25) and/or the driven roller (11) and/or the driving roller (9) and/or the housing (17).

7. The clutch/brake unit (3) according to any of the preceding claims, **characterized in that** fasteners (13) for fastening the clutch/brake unit (3) to a frame (12) of the roller path (1) in an operating position underneath the rollers (5) are provided, with the driven roller (11) being provided closer to the fasteners (13) than the driving roller (9).

8. The clutch/brake unit (3) according to any of the preceding claims, **characterized in that** a traction mechanism allowing an axial displacement is provided as the endless traction mechanism (7), wherein in particular one of the following traction mechanisms is provided: V-ribbed belt; round belt; chain.

9. The clutch/brake unit (3) according to any of the preceding claims, **characterized in that** the cylinder (18) of the piston/cylinder unit (19) is designed as a pneumatic cylinder (18) and that the piston (20) is sealed toward the housing (17) and the axis (16) by means of sealants, in particular sealing rings (26, 27).

10. An accumulating conveyor (2) comprising a roller path (1) for transporting a unit load (4), **characterized in that**, per section of the roller path (1), at least one clutch/brake unit (3) according to any of claims 1 to 7 is provided.

## Revendications

1. Unité embrayage frein (3) pour un convoyeur accumulateur (2) pour l'entraînement et le freinage au moins d'un rouleau (5) prévu pour le transport de marchandises de détail (4) sur un transporteur à rouleaux (1) du convoyeur accumulateur (2) à l'aide d'un moyen de traction sans fin (7), l'unité embrayage frein (3) étant entraînée durablement en fonctionnement par un moyen de traction d'entraînement sans fin (8) sur un rouleau menant (9) et étant réalisée dans un état de fonctionnement couplé pour la transmission du mouvement de rotation du rouleau menant (9) autour d'un axe (16) à un rouleau mené (11) et dans un état de fonctionnement de freinage pour le freinage du rouleau mené (11) sur un boîtier (17) de l'unité embrayage frein (3), le rouleau mené (11) étant relié par le moyen de traction sans fin (7) au rouleau (5), **caractérisée en ce que**
des premiers moyens d'actionnement sont réalisés pour le déplacement du rouleau mené (11) le long de l'axe (16) en direction du boîtier (17) afin d'amener l'unité embrayage frein (3) dans son état de fonctionnement de freinage, et des seconds moyens d'actionnement étant réalisés pour le déplacement du rouleau mené (11) le long de l'axe (16) en direction du rouleau menant (9) afin d'amener l'unité embrayage frein (3) dans son état de fonctionnement couplé, et les premiers moyens d'actionnement étant formés par un ressort et en particulier par un ressort de pression (24) et les seconds moyens d'actionnement étant formés par une unité à piston et cylindre (19) intégrée dans l'unité embrayage frein (3), dont le piston loge de manière rotative le rouleau mené (11) par au moins un roulement à billes (22, 23) tout en étant guidé linéairement le long de l'axe (16) de l'unité embrayage frein (3) et l'unité embrayage frein (3) étant commandée lorsque le cylindre (18) est exempt de pression en particulier dans son état de fonctionnement de freinage.

2. Unité embrayage frein (3) selon la revendication 1, **caractérisée en ce qu'**un disque de frein (25) est prévu entre le rouleau mené (11) et le boîtier (17) et/ou un disque d'embrayage (10) est prévu entre le rouleau mené (11) et le rouleau menant (9).

3. Unité embrayage frein (3) selon la revendication 1, **caractérisée en ce que** les premiers moyens d'actionnement sont réalisés dans l'état de fonctionnement de freinage pour le pressage du rouleau mené (11) contre le boîtier (17) et/ou les seconds moyens d'actionnement sont réalisés dans l'état de fonctionnement couplé pour le pressage du rouleau mené (11) contre le rouleau menant (9).

4. Unité embrayage frein (3) selon l'une quelconque des revendications 1 à 3, **caractérisée en ce que** les premiers moyens d'actionnement et les seconds moyens d'actionnement sont formés par une unité à piston et cylindre intégrée, dont les pistons logent de manière rotative le rouleau mené sur au moins un roulement à billes tout en étant guidés linéairement le long de l'axe de l'unité embrayage frein.

5. Unité embrayage frein (3) selon l'une quelconque des revendications précédentes, **caractérisée en ce que** le disque d'embrayage (10) et/ou le disque de frein (25) et/ou le rouleau mené (11) et/ou le rouleau menant (9) et/ou le boîtier (17) sont constitués d'un matériau pour un embrayage à friction à force qui réduit l'énergie d'embrayage et/ou de freinage par une conversion d'énergie élastique et thermique pratiquement sans enlèvement de matière sur les surfaces de friction.

6. Unité embrayage frein (3) selon la revendication 5, **caractérisée en ce qu'**un élastomère et ici en particulier un polyuréthane ou un thermoplaste et ici en particulier un polyamide est prévu comme matériau du disque d'embrayage (10) et/ou du disque de freinage (25) et/ou du rouleau mené (11) et/ou du rouleau menant (9) et/ou du boîtier (17).

7. Unité embrayage frein (3) selon l'une quelconque des revendications précédentes, **caractérisée en ce que** des moyens de fixation (13) sont prévus pour la fixation de l'unité embrayage frein (3) sur un cadre (12) du transporteur à rouleaux (1) en position de fonctionnement sous les rouleaux (5), le rouleau mené (11) étant prévu plus près des moyens de fixation (13) que le rouleau menant (9).

8. Unité embrayage frein (3) selon l'une quelconque des revendications précédentes, **caractérisée en ce que**, comme moyen de traction sans fin (7), un moyen de traction permettant un décalage axial est prévu, en particulier l'un des moyens de traction suivants étant prévu : courroie trapézoïdale à nervures ; courroie ronde ; chaîne.

9. Unité embrayage frein (3) selon l'une quelconque des revendications précédentes, **caractérisée en ce que** le cylindre (18) de l'unité à piston et cylindre (19) est réalisé comme un cylindre pneumatique (18) et **en ce que** le piston (20) est rendu étanche par rapport au boîtier (17) et à l'axe (16) à l'aide de moyens étanches, en particulier de bagues d'étanchéité (26, 27).

10. Convoyeur accumulateur (2) avec un transporteur à rouleaux (1) pour le transport de marchandises de détail (4), **caractérisé en ce qu'**au moins une unité embrayage frein (3) selon l'une quelconque des revendications 1 à 7 est prévue par section du transporteur à rouleaux (1).
